# EUROPEAN PATENT APPLICATION

(11) **EP 4 542 193 A1**
(43) Date of publication of application: **23.04.2025**
(21) Application number: 23854751.7
(22) Date of filing: 12.07.2023
(51) Int. Cl.: G01M 7/02, G01M 17/007

(54) **AUTOMOTIVE BODY VIBRATION CHARACTERISTIC TESTING METHOD AND DEVICE**

(30) Priority: 17.08.2022 JP 2022129828; 05.06.2023 JP 2023092034
(71) Applicant: JFE Steel Corporation, Tokyo 100-0011 (JP)
(72) Inventor: KATAGIRI, Tomokatu, Tokyo 100-0011 (JP)
(74) Representative: Grünecker Patent- und Rechtsanwälte PartG mbB
(86) International application number: PCT/JP2023/025651
(87) International publication number: WO 2024/038714

(57) **Abstract**

An automotive body vibration characteristic testing method according to the present invention obtains vibration characteristics of an automotive body 100 by inputting vibration to the automotive body 100, and includes: an excitation step S1 of setting a plurality of vibration input parts 111 in the automotive body 100 supported by an air cushion 211 and vibration is input to each of the plurality of set vibration input parts 111 to excite the automotive body 100; and an oscillation measurement step S3 of measuring data on vibration characteristics of the automotive body 100 excited in the excitation step S1. In the excitation step S1, an input wave of vibration input to one of the vibration input parts 111 in the automotive body 100 is delayed from an input wave of vibration input to other vibration input parts 111.

## Description

### Field

The present invention relates to automotive body vibration characteristic testing method and device to obtain vibration characteristics related to vibration and noise generated in the automotive body.

### Background

To measure vibration and internal vehicle noise generated in an automotive body of a running car and perceived by an occupant, most tests are conducted on completed cars. For example, some completed cars undergo an actual car running test (road test) and other completed cars undergo a bench test by being placed on a shake table which inputs vibration to wheels (see, for example, Patent Literature 1). On the other hand, in the design phase of an automotive body structure of a car, few tests are conducted to evaluate effects of materials applied to the automotive body structure and automotive parts with respect to vibration characteristics such as vibration and noise generated in an automotive body.

There is also a test to obtain vibration characteristics generated in each part of an automotive body by inputting vibration to one spot for excitation while fixing an automotive body floor of the automotive body. However, in this test, given the local elastic deformation around parts of the automotive body where vibration is input (hereinafter referred to as "vibration input parts"), a large exciting force cannot be applied to the vibration input parts. Due to the insufficient exciting force, levels of vibration excited in parts away from the vibration input parts tend to decrease.

If vibration mode analysis of the entire automotive body is performed using the levels of vibration in the automotive body obtained with such an insufficient exciting force, there is a possibility that a deformation state of the automotive body estimated by the vibration mode analysis is biased. In order to eliminate such a bias, the vibration input parts in the automotive body are changed to other places, and the test is repeated, followed by averaging vibration data on those plurality of vibration input parts to obtain a true natural vibration mode.

However, when a completed car is actually running, vibration from a road surface to an automotive body is input to parts where tires and suspensions are coupled to the automotive body. On the other hand, the vibration mode analysis in which vibration is input to one spot of an automotive body for excitation is merely a means for specifying particularly a lower order natural vibration mode of an automotive body structure, and it is not always true that vibration phenomena generated in a running completed car are simulated.

Road noise and booming noise generated in a running completed car are within an audible range (20 Hz to 2.0 kHz) in the vehicle interior, being sourced from vibration input from tires, vibration of body frame parts, and vibration of panel parts transmitted from these kinds of vibration through the body frame parts. In order to evaluate noise levels from 20 Hz to 2.0 kHz in the vehicle interior, it is important to evaluate vibration characteristics of an automotive body structure under vibration conditions similar to conditions of a running completed car.

Patent Literature 2 discloses a handling stability (steering stability) evaluation technique that simulates vibration input from a road surface to a running car by a bench test using an automotive vehicle in a state of a completed car. The technique is a testing method for simulating rotational motions, that is, rolling (around the longitudinal axis), pitching (around the transverse axis), and yawing (around the vertical axis), of an automotive body suspended on a four-wheel suspension which are caused by periodic steering operations such as continuous lane change and slalom running, and the technique mainly evaluates the tire performance and the suspension performance. In this testing method, a tire is placed on each of a plurality of exciters that excites the automotive vehicle in a state of a completed car, and an excitation controller controls each exciter individually, so that the excitation wave forms (sine waves) input to the left, right, front, and rear tires are shifted by a half cycle relative to each other, thereby performing excitation and evaluation of the handling stability (steering stability). For the sake of safety and ride comfort, steering is slow while a car is driven but, for example, during slalom running or lane change to avoid emergency, steering becomes fastest, equivalent to about 1.0 Hz when expressed in cycles. Therefore, the handling stability (steering stability) evaluation technique disclosed in Patent Literature 2 does not intend to evaluate vibration characteristics of an automotive body structure in a frequency range (20 Hz to 2.0 kHz) of internal vehicle noise. Furthermore, in an excitation method disclosed in Patent Literature 2, an automotive body structure (body-in-white) is excited through tires or suspensions. When evaluating a frequency band of 20 Hz or more in an audible range, the vibration response of an observation target becomes small due to large vibration reducing (vibration damping), which indicates that this method is unsuitable as an evaluation approach.

In order to evaluate differences in vibration and noise depending on materials applied to an automotive body structure and automotive parts by inputting vibration to an automotive body, it is preferable to conduct a test that simulates vibration phenomena in a running completed car by simultaneously inputting vibration to a plurality of vibration input parts in the automotive body.

### Citation List

### Patent Literature

Patent Literature 1: JP 2000-88697 A
Patent Literature 2: JP 2011-247262 A

### Summary

### Technical Problem

Typically, vibration and internal vehicle noise of an automotive body are evaluated mainly by perceptual evaluation or acoustic measurement in a running test (road test) of a completed car. In a few cases, vibration characteristics are evaluated in an automotive body structure independently, that is, what is called a body-in-white. In the design phase of an automotive body structure, to obtain vibration characteristics such as vibration and internal vehicle noise generated in an automotive body, it is necessary to predict the vibration characteristics by computer aided engineering (CAE) analysis after creating an analysis model similar to a completed car. Such CAE analysis enables evaluation of changes in the vibration characteristics of the automotive body due to variations in automotive body structure or material used for automotive parts.

To guarantee predicted values of vibration characteristics of the automotive body obtained by CAE analysis and to ensure the accuracy of the predicted values, measurement data on the vibration characteristics of a completed car obtained by a running test (road test) or a bench test of the completed car is indispensable. However, it takes an enormous amount of time and money to obtain such measurement data. In contrast, if vibration characteristics testing of a body-in-white automotive body structure is feasible, it is possible to significantly reduce the time required for creating an analysis model used for CAE analysis and the time for CAE analysis, which makes it easier to obtain vibration characteristics of an automotive body in the design phase of the automotive body structure.

In such testing to obtain vibration characteristics of an automotive body, the key is to simulate a state of vibration generated in an automotive body of a running completed car. However, such vibration characteristics testing using an automotive body has the following two problems.

The first problem is simulation of constraint conditions of an automotive body due to peripheral parts such as vehicle underbody (chassis and suspension). This problem has been solved by supporting the automotive body with an air cushion (air spring).

The second problem is an excitation method for exciting vibration and noise in an automotive body. To address this problem, there is an approach of simulating input waves of vibration (wave forms, frequencies, or the like of vibration) input to an automotive body based on measurement data of vibration characteristics in an actual car running test (road test). However, this approach has been limited to a test for exciting an automotive body by inputting vibration having wave forms acquired in several defined road surface conditions. That is to say, no test has been performed to excite an automotive body by parametrically changing a myriad of different road surface conditions, vibration input parts, and vehicle running conditions (such as driving speed). Therefore, in a test for exciting an automotive body to obtain vibration characteristics of the automotive body, it has been desired to appropriately change vibration input parts of the automotive body and input waves of vibration so as to simulate various road surface conditions and vehicle running conditions during actual driving.

The present invention has been made to solve the problem, and an object of the present invention is to provide automotive body vibration characteristic testing method and device which appropriately enable simulation of road surface conditions and vehicle running conditions during actual driving, thereby obtaining the vibration characteristics of the automotive body.

### Solution to Problem

An automotive body vibration characteristic testing method according to the present invention obtains vibration characteristics of an automotive body by inputting vibration to the automotive body, and includes: an excitation step of setting a plurality of vibration input parts in the automotive body supported by an air cushion, and inputting vibration to each of the plurality of set vibration input parts to excite the automotive body; and an oscillation measurement step of measuring data on vibration characteristics of the automotive body excited in the excitation step, wherein, in the excitation step, an input wave of vibration input to one of the vibration input parts in the automotive body is delayed from an input wave of vibration input to other vibration input parts.

The excitation step may include: setting the vibration input parts at the rear right and rear left of the automotive body; generating a plurality of reference signals having a sine wave or a random wave as a reference for an input wave of vibration input to the vibration input parts; generating a delay signal obtained by delaying one of the plurality of reference signals generated; inputting vibration having the reference signal as an input wave to one vibration input part at the rear left or rear right of the automotive body; and inputting vibration having the delay signal as an input wave to the other vibration input part at the rear left or rear right of the automotive body.

The excitation step may include: setting the vibration input parts at the front and rear of the automotive body; generating a plurality of reference signals having a sine wave or a random wave as a reference for an input wave of vibration input to the vibration input parts; generating a delay signal obtained by delaying one of the plurality of reference signals generated; inputting vibration having the reference signal as an input wave to the vibration input part at the front of the automotive body; and inputting vibration having the delay signal as an input wave to the vibration input part at the rear of the automotive body.

The oscillation measurement step may include at least one of: measuring vibration acceleration generated in the automotive body using an accelerometer placed in the automotive body, and measuring sound pressure of noise generated from the automotive body using a microphone placed inside the automotive body as the data on the vibration characteristics.

A automotive body vibration characteristic testing device according to the present invention obtains vibration characteristics of an automotive body by inputting vibration to the automotive body, and includes: an excitation device configured to input vibration to a plurality of vibration input parts set in the automotive body supported by an air cushion to excite the automotive body; and an oscillation measurement device configured to measure data on the vibration characteristics of the automotive body excited by the excitation device, wherein the excitation device includes: a plurality of exciters configured to input vibration of a predetermined input wave to the plurality of vibration input parts in the automotive body for excitation; a signal generation device configured to generate a plurality of reference signals serving as references for input waves of vibration input to the vibration input parts; a delay processing device configured to generate a delay signal by delaying one of the plurality of generated reference signals; and a plurality of exciter control devices configured to perform drive control of each of the exciters based on the reference signals or the delay signal generated, and the oscillation measurement device includes: at least one of: an accelerometer placed in the automotive body and configured to measure vibration acceleration generated in the automotive body; and a microphone placed inside the automotive body and configured to measure data on noise generated from the automotive body; an exciting force/input acceleration meter configured to measure an exciting force and input acceleration for exciting the automotive body by vibration input to the automotive body; and a data logger configured to acquire at least one of: the vibration acceleration measured by the accelerometer; and sound pressure of noise measured by the microphone, and acquire the exciting force and input acceleration measured by the exciting force/input acceleration meter.

### Advantageous Effects of Invention

The present invention enables simulation of a state of vibration excited in an automotive body under road surface conditions and vehicle running conditions during actual driving, thereby obtaining vibration characteristics such as vibration and noise generated in the automotive body. Accordingly, in the design phase of an automotive body, it is possible to obtain changes in the vibration characteristics of the automotive body due to variations in automotive body structure or material. In addition, it is possible to parametrically change vibration input conditions simulating road surface conditions and running conditions (such as driving speed) during actual driving, which also facilitates analysis modeling for CAE analysis. Furthermore, it is easy to define an input wave of vibration input to each of a plurality of vibration input parts in an automotive body and a delay time provided to the input wave, thereby enabling favorable standardization and simulation of vibration input conditions related to the vibration input to the automotive body in the vibration characteristics testing.

In the present invention, the output of an exciter or an exciting force is reduced by directly exciting a body frame of body suspending parts and suspension coupling peripheral parts, thereby enabling efficient vibration testing. Particularly, it is possible to accurately evaluate noise levels from 20 Hz to 2.0 kHz in an audible range and vibration characteristics of the body frame which tend to cause a difference in perceptual evaluation even though the measured signal response is small.

### Brief Description of Drawings

FIG. 1 is a flowchart for describing a processing flow of an automotive body vibration characteristic testing method according to an embodiment of the present invention.
FIG. 2 illustrates a first aspect of a plurality of vibration input parts in an automotive body where vibration is input in the automotive body vibration characteristic testing method and device according to an embodiment of the present invention.
FIG. 3 illustrates a second aspect of a plurality of vibration input parts in an automotive body in the automotive body vibration characteristic testing method and device according to an embodiment of the present invention.
FIG. 4 is a block diagram for describing a configuration of the automotive body vibration characteristic testing device according to an embodiment of the present invention.
FIG. 5 illustrates an example of how to place an exciter which inputs vibration to an automotive body in the automotive body vibration characteristic testing device according to an embodiment of the present invention.
FIG. 6 illustrates specific aspects of how to input vibration to an automotive body for excitation in the automotive body vibration characteristic testing device according to an embodiment of the present invention ((a) first aspect, (b) second aspect).
FIG. 7 is a block diagram for describing another configuration of the automotive body vibration characteristic testing device according to an embodiment of the present invention (part 1).
FIG. 8 is a block diagram for describing another configuration of the automotive body vibration characteristic testing device according to an embodiment of the present invention (part 2).
FIG. 9 illustrates, with graphs, frequency response spectra of vibration generated in an automotive body when random wave vibration is input to vibration input parts at the front and rear of the automotive body in Example 1 ((a) delay time: 125 ms, (b) delay time: 90 ms).
FIG. 10 illustrates parts where vibration acceleration generated in the automotive body is measured by inputting sine wave vibration to vibration input parts at the rear right and rear left of the automotive body in Example 1 ((a) side view, (b) top view).
FIG. 11 illustrates, with a graph, a ratio of peak amplitude of vibration acceleration generated in each part when vibration is input to the vibration input parts at the rear right and rear left of the automotive body in Example 1 by delay processing to provide phase differences of 0°, 90°, and 180°.
FIG. 12 illustrates parts where vibration acceleration generated in an automotive body is measured by inputting sine wave vibration to vibration input parts at the front and rear of the automotive body in Example 2 ((a) side view, (b) top view).
FIG. 13 illustrates, with graphs, frequency response spectra of vibration generated in the automotive body when random wave vibration is input to the vibration input parts at the front and rear of the automotive body in Example 2 ((a) low-frequency band of 20 to 100 Hz, (b) medium-frequency band of 100 to 400 Hz).

### Description of Embodiments

### <Automotive Body>

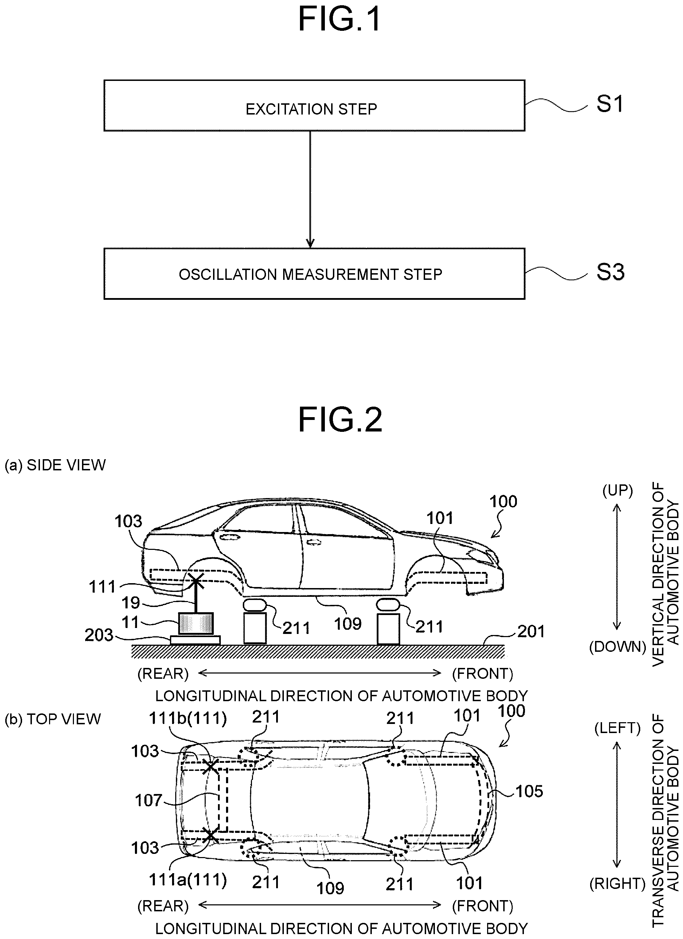

An automotive body, a target of vibration characteristics testing in the present invention, is what is called a body frame (body-in-white) excluding a chassis part, a suspension part, a driving system part, an interior part, and the like. The following embodiment of the present invention is targeted to an automotive body 100 illustrated in FIG. 2 as an example. The automotive body 100 includes, for example, body frame parts such as a front side member 101, a rear side member 103, a bumper reinforcement 105, and a rear floor cross member 107 and also includes panel parts such as an automotive body floor 109.

As illustrated in FIG. 2, the automotive body floor 109 of the automotive body 100 is mounted and supported on four air cushions 211 placed on a floor 201. Accordingly, when vibration is input to the automotive body 100, the automotive body 100 is excited while the automotive body floor 109 supported by the air cushions 211 is not constrained.

It should be noted that the present invention is not limited to the illustrated parts and method for supporting the automotive body 100. Parts and methods for supporting the automotive body 100 may be selected appropriately depending on vibration characteristics to be evaluated.

Hereinafter described are automotive body vibration characteristic testing method and device according to the present invention (hereinafter referred to as a "vibration characteristics testing method" and a "vibration characteristics testing device" independently), assuming that the automotive body 100 is the target of the vibration characteristics testing.

### <Vibration Characteristics Testing Method >

As illustrated in FIG. 2, the vibration characteristic testing method according to this embodiment is to obtain vibration characteristics of the automotive body 100 by inputting vibration to the automotive body 100. As illustrated in FIG. 1, the vibration characteristic testing method according to this embodiment includes an excitation step S1 and an oscillation measurement step S3.

### <<Excitation Step>>

In the excitation step S1, as illustrated in FIG. 2, a plurality of vibration input parts 111 (111a, 111b) is set in the automotive body 100 having the automotive body floor 109 supported by the air cushions 211 placed on the floor 201. In the excitation step S1, vibration is input to each of the plurality of set vibration input parts 111, thereby exciting the automotive body 100.

Furthermore, in the excitation step S1, the input wave of vibration input to one of the vibration input parts 111 (for example, 111b) of the plurality of vibration input parts 111 is delayed from the input wave of vibration input to other vibration input parts 111 (for example, 111a).

### <<Oscillation Measurement Step>>

The oscillation measurement step S3 is to measure data on the vibration characteristics of the automotive body 100 excited in the excitation step S1.

In the oscillation measurement step S3 of this embodiment, an accelerometer is placed in the automotive body 100, and vibration acceleration generated in the automotive body 100 is measured as data on the vibration characteristics of the automotive body 100.

Hereinafter described are the plurality of vibration input parts 111 set in the automotive body 100 and the input wave of vibration input to each vibration input part in the excitation step S1 of the vibration characteristic testing method according to this embodiment.

Vibration generated in the automotive body 100 during actual driving tends to be accentuated, for example, by the input of vibration having a wave form excited by periodic grooves of a road surface or periodic sipe patterns of a tire surface rather than the input of vibration having a completely random wave form to the four wheels in an independent manner. Furthermore, if a resonance point having the same frequency as vibration input from the road surface is present in the automotive body 100, there is a risk of increasing vibration excited in the automotive body 100 and noise in the vehicle interior.

In order to simulate the vibration input to the automotive body 100 during actual driving, in the excitation step S1, (a) the plurality of vibration input parts 111 and (b) vibration input to each of the vibration input parts 111 are set in the follow manner.

### (a) Setting of Vibration Input Parts

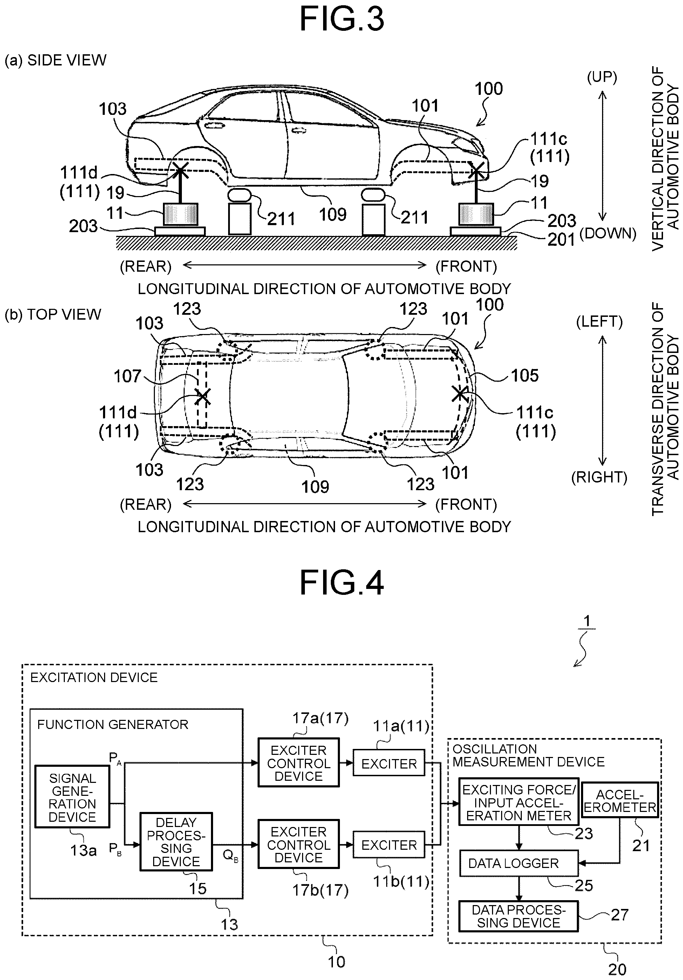

The plurality of vibration input parts 111 in the automotive body 100 may be set as in FIG. 2 illustrating a first aspect as described above or may be set as in FIG. 3 illustrating a second aspect.

In the first aspect, as illustrated in FIG. 2, the vibration input parts 111a and 111b are set at the rear right and rear left of the automotive body 100, respectively. This aspect simulates off-road travel (off-road running) and rough-road travel (rough-road running, for example, on a cobblestoned road surface) of a front engine-front drive vehicle (front-wheel-drive vehicle) having automotive parts of a drive system such as an engine and a transmission placed at the front of the vehicle.

In off-road travel (off-road running) and rough-road travel (rough-road running on a cobblestoned road surface), it is considered that vibration input from the left tire and vibration input from the right tire are out of phase to a large extent. In a front-wheel-drive vehicle, heavy objects are suspended at the front of the vehicle, and vibration (amplitude) on the front side of the vehicle is suppressed, whereas the rear of the vehicle having a small weight distribution is likely to vibrate, and the vibration amplitude (displacement) tends to be larger than that at the front of the vehicle. For this reason, the front of the vehicle, which is heavier, has a small displacement and the rear of the vehicle has a relatively large displacement in the rough-road travel (off-road running); therefore, the contribution of a deformation mode in which the automotive body is deformed in a twisting direction becomes large in the automotive body. In the first aspect, in order to simulate a state of vibration in which the rear of a front-wheel-drive vehicle is mainly vibrated, the vibration input part 111a and the vibration input part 111b are set at the rear right and rear left of the automotive body 100, respectively, in the excitation step S1. The phase of an input wave of vibration input to the left vibration input part 111b is delayed from the phase of an input wave of vibration input to the right vibration input part 111a. In this manner, vibration is input to the vibration input parts 111a and 111b, and the automotive body 100 is excited.

In the second aspect, as illustrated in FIG. 3, vibration input parts 111c and 111d are set at the front and rear of the automotive body 100, respectively. This aspect simulates a case where vibration having the same wave form is input to a vehicle from the front and rear tires due to irregularities on a road surface.

During actual driving, wave forms of vibration input to the front and rear of a vehicle due to irregularities on a road surface are the same, but there is a slight time difference between the vibration input to the front and the vibration input to the rear. In the second aspect, to simulate a state of vibration in which vibration of the same wave form is input to the front and to the rear of a vehicle at different times, the vibration input part 111c and the vibration input part 111d are set to the front and rear of the automotive body 100, respectively, in the excitation step S1. The phase of an input wave of vibration input to the rear vibration input part 111d of the automotive body 100 is delayed from the phase of an input wave of vibration input to the front vibration input part 111c. In this manner, vibration is input to the vibration input parts 111c and 111d, and the automotive body 100 is excited.

### (b) Excitation Method

Examples of a method for inputting vibration to each vibration input part 111 of the automotive body 100 for excitation include (b-i) a method of inputting sine wave vibration having a predetermined frequency for a certain period of time to excite stationary vibration and (b-ii) a method of inputting random wave vibration continuously for a certain period of time.

### (b-i) Excitation by Input of Sine Wave Vibration Having Predetermined Frequency

The excitation by the input of sine wave vibration is effective for a test simulating vibration input to an automotive body by a periodic structure on a road surface such as drainage groove during actual driving, for CAE analysis, and for a test to obtain vibration characteristics related to a predetermined frequency at which prominent vibration and noise are perceived during actual driving. Particularly, the excitation by the input of sine wave vibration is useful at a frequency band of about 200 Hz or less in which a natural frequency peak of vibration generated in an automotive body is clear.

Hereinafter described is a method in which the vibration input part 111c and the vibration input part 111d are respectively set at the front and rear of the automotive body 100 as illustrated in FIG. 3, and sine wave vibration is input to each of the vibration input parts 111c and 111d.

First, a sine wave reference signal having a predetermined frequency is generated as a reference for an input wave of vibration input to each of the vibration input parts 111c and 111d. The input wave of vibration input to the vibration input part 111c at the front of the automotive body 100 is used as a reference signal. On the other hand, the input wave of vibration input to the vibration input part 111d at the rear of the automotive body 100 is used as a delay signal obtained by delaying of the reference signal.

If the reference signal has a sine wave, providing the reference signal with a phase difference of 0° to 180° to delay the reference signal enables generation of the delay signal. The phase difference between the input waves of vibration input to the vibration input parts 111c and 111d at the front and rear of the automotive body 100 is set between 0° and 180°. This enables simulation of various vibration modes of the automotive body 100. Providing a sine wave reference signal with a phase difference to delay the reference signal is synonymous with providing the reference signal with a delay time corresponding to the phase difference to delay the reference signal. Therefore, the delay signal may be generated by a predetermined delay time given to the reference signal.

Hereinafter described is a method in which the vibration input part 111a and the vibration input part 111b are respectively set at the rear right and rear left parts of the automotive body 100 as illustrated in FIG. 2, and sine wave vibration is input to each of the vibration input parts 111a and 111b.

First, a sine wave reference signal having a predetermined frequency is generated as a reference for an input wave of vibration input to each of the vibration input parts 111a and 111b. The input wave of vibration input to the vibration input part 111a at the rear right of the automotive body 100 is used as a reference signal. On the other hand, the input wave of vibration input to the vibration input part 111b at the rear left of the automotive body 100 is used as a delay signal obtained by delaying of the reference signal.

In the excitation step S1, to simulate complete deformation of a torsional mode in the automotive body 100, sine waves are used as the input waves of vibration input to the vibration input part 111a and the vibration input part 111b, and a phase difference of the input waves is set to 180° so as to invert the phases.

However, it is assumed that vibration input during actual driving often excites a vibration mode where vertical bending or lateral bending is combined with torsion. In order to simulate such various vibration modes in the automotive body 100, sine waves are used as the input waves of vibration in the excitation step S1, and a phase difference of the input waves of vibration input to the vibration input part 111a and the vibration input part 111b is set between 0° and 180°.

### (b-ii) Excitation by Input of Random Wave Vibration

The excitation by the input of random wave vibration is effective for a test that simulates mainly an asphalt pavement surface with less irregularities and for a test that simulates vibration input to an automotive body in a region where the driving speed is relatively high. The input of random wave vibration enables collective measurement of vibration generated in the automotive body 100 over a wide frequency band and is particularly effective when obtaining vibration characteristics in a high-frequency band more than 200 Hz in which a large number of natural frequency peaks are seen and difficult to separate.

However, if the automotive body 100 is excited by the input of random wave vibration, it is difficult to control or adjust the phase for each frequency with respect to the input wave of random wave. For this reason, for example, as illustrated in FIG. 3, in a case where the vibration input parts 111c and 111d are set at the front and rear of the automotive body 100, respectively, the input wave of vibration input to the front vibration input part 111c is set as a reference signal of the random wave. The input wave of vibration input to the rear vibration input part 111d is set as a delay signal delayed by providing the reference signal with a predetermined delay time.

In other words, in a case where the input wave of vibration is a random wave, a reference signal generated by the same signal generation device (oscillation source) such as a function generator is used as the input wave of vibration input to the front vibration input part 111c. Furthermore, a delay signal obtained by delay processing on the reference signal is used as the input wave of vibration input to the rear vibration input part 111d.

Accordingly, it is possible to excite the automotive body 100 with the random wave and the frequency component having the same wave form at both the front and the rear of the automotive body 100, thereby enabling simulation of random wave vibration input to the automotive body during actual driving. A delay time for the generation of a delay signal may be determined from the vehicle speed of an actual vehicle and a distance between the front and rear wheels (a distance between the front and rear shafts).

As described above, the automotive body vibration characteristic testing method according to this embodiment enables simulation of a state of vibration excited in the automotive body 100 under road surface conditions and vehicle running conditions during actual driving, thereby obtaining vibration characteristics such as vibration and noise generated in the automotive body 100. Accordingly, in the design phase of the automotive body 100, it is possible to obtain changes in the vibration characteristics of the automotive body 100 due to variations in automotive body structure or material.

In addition, in the automotive body vibration characteristic testing method according to this embodiment, it is possible to appropriately change input waves (input wave forms, frequencies, and amplitude) of vibration input to the plurality of vibration input parts 111 and delay times provided to the input waves of vibration input to each vibration input part. Accordingly, it is possible to parametrically change vibration input conditions simulating road surface conditions and running conditions (such as driving speed) during actual driving, which also facilitates analysis modeling for CAE analysis.

Furthermore, it is easy to define an input wave of vibration input to each of a plurality of vibration input parts in an automotive body and a delay time provided to the input wave, thereby enabling favorable standardization and simulation of vibration input conditions related to the vibration input to the automotive body in the vibration characteristics testing.

### <Vibration Characteristics Testing Device>

The vibration characteristics testing method according to this embodiment can be implemented using a vibration characteristic testing device 1 as illustrated in FIG. 4. Hereinafter, configurations of the vibration characteristic testing device 1 will be described, assuming that that the automotive body 100 illustrated in FIG. 2 is a target of the vibration characteristics testing.

The vibration characteristic testing device 1 according to this embodiment is used for carrying out the vibration characteristics testing method according to this embodiment, and the device includes an excitation device 10 and an oscillation measurement device 20 as illustrated in FIG. 4.

### <<Excitation Device>>

The excitation device 10 excites the automotive body 100 by inputting vibration to the plurality of vibration input parts 111 (111a, 111b) in the automotive body 100 having the automotive body floor 109 supported by the air cushions 211 as illustrated in FIG. 2. As illustrated in FIG. 4, the excitation device 10 includes a plurality of exciters 11 (11a, 11b), a function generator 13, a delay processing device 15, and a plurality of exciter control devices 17 (17a, 17b).

### (Exciter)

The exciters 11 input vibration having a predetermined input wave (input wave form and frequency of vibration) to each of the plurality of vibration input parts 111 to excite the automotive body 100.

In this embodiment, the rear right and rear left of the automotive body 100 are provided with the exciter 11a and the exciter 11b (see FIG. 4) which input vibration to the vibration input part 111a and vibration input part 111b, respectively (see FIG. 2).

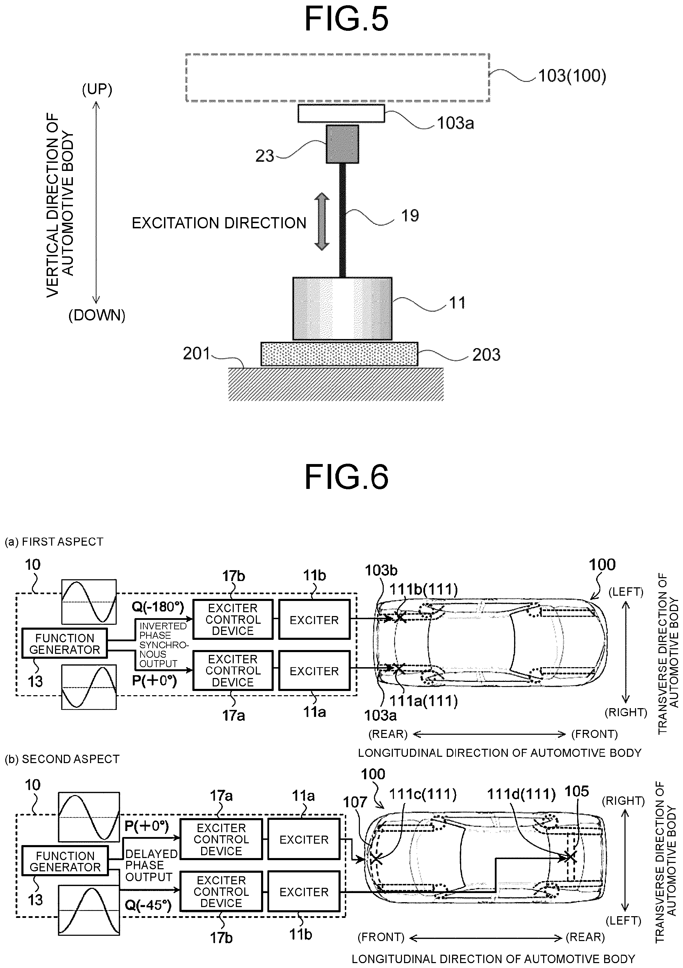

Furthermore, as illustrated in FIG. 5, each exciter 11 is placed on the floor 201 with a damping rubber 203 involved. Each exciter 11 is connected to a mounting bracket 103a bonded to the rear side member 103, a part of an underframe of the automotive body 100, through a steel exciting bar (stinger/driving rod) 19. Accordingly, the driven exciters 11 input vibration to the vibration input parts 111 set at the rear side member 103 of the automotive body 100 via the exciting bar (stinger/driving rod) 19, thereby exciting the automotive body 100.

An example of the exciters 11 include electro-dynamic exciters (electro-magnetic exciters), but the present invention is not limited thereto.

### (Function Generator)

The function generator 13 functions as a signal generation device 13a that generates a plurality of reference signals serving as references for input waves of vibration input to the vibration input parts 111 of the automotive body 100. The function generator 13 can appropriately set the wave form and frequency of each reference signal and select a sine wave or a random wave as the wave form of each reference signal.

In this embodiment, as illustrated in FIG. 4, the function generator 13 generates two reference signals P_{A} and P_{B} serving as references for input waves of vibration input to the vibration input part 111a and the vibration input part 111b on the rear right and rear left of the automotive body 100, respectively (see FIG. 2). Hereinafter, the two reference signals P_{A} and P_{B} are also collectively referred to as a reference signal P.

### (Delay Processing Device)

The delay processing device 15 generates a delay signal obtained by delaying one of a reference signal generated by the signal generation device 13a. In this embodiment, it is assumed that the delay processing device 15 is embedded in the function generator 13. As illustrated in FIG. 4, the delay processing device 15 generates a delay signal Q_{B} by delaying one reference signal P_{B} of the two reference signals P_{A} and P_{B} generated by the signal generation device 13a in the function generator 13.

### (Exciter Control Device)

The exciter control devices 17 perform drive control of the plurality of exciters 11 based on a reference signal generated by the signal generation device 13a or a delay signal generated by the delay processing device 15. In this embodiment, as illustrated in FIG. 4, the exciter control device 17a performs drive control of the exciter 11a based on the reference signal P_{A} generated by the signal generation device 13a, and the exciter control device 17b performs drive control of the exciter 11b based on the delay signal Q_{B} generated by the delay processing device 15. In a case where electro-dynamic exciters (electro-magnetic exciters) are employed as the exciters 11, the exciter control devices 17 generate a power input pattern to be input to the electro-dynamic exciters (electro-magnetic exciters) based on a reference signal or a delay signal.

To excite the automotive body 100 by the excitation device 10, there are two aspects as illustrated in FIG. 6 which have been described with reference to FIGS. 2 and 3 in the section of Setting of Vibration Input Parts in the vibration characteristics testing method according to this embodiment.

In the first aspect, as illustrated in FIG. 6(a), vibration is input to the vibration input parts 111a and 111b set at the rear right and rear left parts of the automotive body 100 for excitation. As described above, this first aspect simulates a state of vibration in which vibration is input mainly to the rear of a front-wheel-drive vehicle (see FIG. 2).

In the first aspect, the reference signal P generated by the function generator 13 is input to the exciter control device 17a to perform drive control of the exciter 11a, and vibration is input to the vibration input part 111a set at the rear right of the automotive body 100. Furthermore, the delay signal Q generated by the function generator 13 is input to the exciter control device 17b to perform drive control of the exciter 11b, and vibration is input to the vibration input part 111b set at the rear left of the automotive body 100. Note that the reference signal P is a sine wave, and the delay signal is delayed by a phase difference of 180° given to the reference signal P in the function generator 13.

In the second aspect, as illustrated in FIG. 6(b), vibration is input to the vibration input parts 111c and 111d at the front and rear of the automotive body 100. As described above, the second aspect simulates a state of vibration in which vibration having the same wave form is input to a vehicle from the front and rear tires due to irregularities on a road surface (see FIG. 3).

In the second aspect, first, the function generator 13 generates the reference signal P and the delay signal Q obtained by delaying the reference signal P. Note that the reference signal P is a sine wave, and the delay signal is delayed by delay processing which provides the reference signal P with a phase difference of 45° (corresponding to a phase angle of -45°).

The generated reference signal P is input to the exciter control device 17a to perform drive control of the exciter 11a, and vibration is input to the vibration input part 111c set at the front of the automotive body 100. On the other hand, the generated delay signal Q is input to the exciter control device 17b to perform drive control of the exciter 11b, and vibration is input to the vibration input part 111d set at the rear of the automotive body 100.

In these two aspects, two sine wave reference signals are generated by the function generator 13, and the delay signal Q is generated by one of the reference signals P being delayed by a phase difference (45° or 180°). Note that the excitation device according to the present invention may generate a plurality of random wave reference signals, perform delay processing to provide a delay time to one of the generated reference signals, and generate a delay signal delayed from the reference signal.

### <<Oscillation Measurement Device>>

As illustrated in FIG. 4, the oscillation measurement device 20 measures data on the vibration characteristics of the automotive body 100 excited by the excitation device 10 and includes an accelerometer 21, an exciting force/input acceleration meter 23, and a data logger 25. In this embodiment, the oscillation measurement device 20 further includes a data processing device 27.

### (Accelerometer)

The accelerometer 21 is placed in the automotive body 100 and measures vibration acceleration generated in the automotive body 100 as data on the vibration characteristics of the automotive body 100. The accelerometer 21 may be placed in a plurality of parts in the automotive body 100.

### (Exciting Force/Input Acceleration Meter)

The exciting force/input acceleration meter 23 measures an exciting force and input acceleration for exciting the automotive body 100 by the input of vibration to the automotive body 100 using the exciters 11 of the excitation device 10. In this embodiment, as illustrated in FIG. 5, the exciting force/input acceleration meter 23 is placed between the exciting bar (stinger/driving rod) 19 and the mounting bracket 103a.

### (Data Logger)

The data logger 25 acquires the vibration acceleration of the automotive body 100 measured by the accelerometer 21 and the exciting force and input acceleration of the vibration input to the automotive body 100 measured by the exciting force/input acceleration meter 23. In this embodiment, the data logger 25 synchronously acquires time history data (time trend data) of the vibration acceleration measured by the accelerometer 21 and time history data (time trend data) of the exciting force and input acceleration of the vibration measured by the exciting force/input acceleration meter.

### (Data Processing Device)

The data processing device 27 processes the time history data (time trend data) of the vibration acceleration of the automotive body 100 acquired by the oscillation measurement device 20 and the time history data (time trend data) of the exciting force and input acceleration of the vibration, thereby obtaining the vibration characteristics of the automotive body 100. The data processing device 27 may be a central processing unit (CPU) of a computer (PC or the like). In this case, these units function when the CPU of the computer executes a predetermined program.

In this manner, the automotive body vibration characteristic testing device according to this embodiment enables implement of the automotive body vibration characteristic testing method according to this embodiment. Accordingly, it is possible to simulate a state of vibration excited in an automotive body under road surface conditions and vehicle running conditions during actual driving, thereby obtaining vibration characteristics such as vibration and noise generated in the automotive body. Furthermore, in the design phase of an automotive body, it is possible to obtain changes in the vibration characteristics of the automotive body due to variations in automotive body structure or material.

In addition, in the automotive body vibration characteristic testing device according to this embodiment, it is possible to appropriately change input waves (input wave forms, frequencies, and amplitude) of vibration input to a plurality of vibration input parts and delay times provided to the input waves of vibration input to each vibration input part. Accordingly, it is possible to parametrically change vibration input conditions simulating road surface conditions and running conditions (such as driving speed) during actual driving.

Furthermore, in the vibration characteristic testing device according to this embodiment, it is easy to define an input wave of vibration input to the automotive body 100 using the excitation device 10 and a delay time provided to the input wave, thereby enabling favorable standardization and simulation of vibration input conditions in the vibration characteristics testing.

In the above description, vibration acceleration is measured as the vibration characteristics of the automotive body 100 by an accelerometer placed in the automotive body 100. In the present invention, note that a microphone may be placed inside the automotive body 100 to measure data on noise generated from the automotive body 100. In this case, sound pressure of the noise is measured with the microphone, and time history data (time trend data) of the sound pressure is acquired with the data logger 25. After that, the data processing device 27 processes the time history data (time trend data) of the sound pressure and obtains noise levels as the vibration characteristics of the automotive body 100.

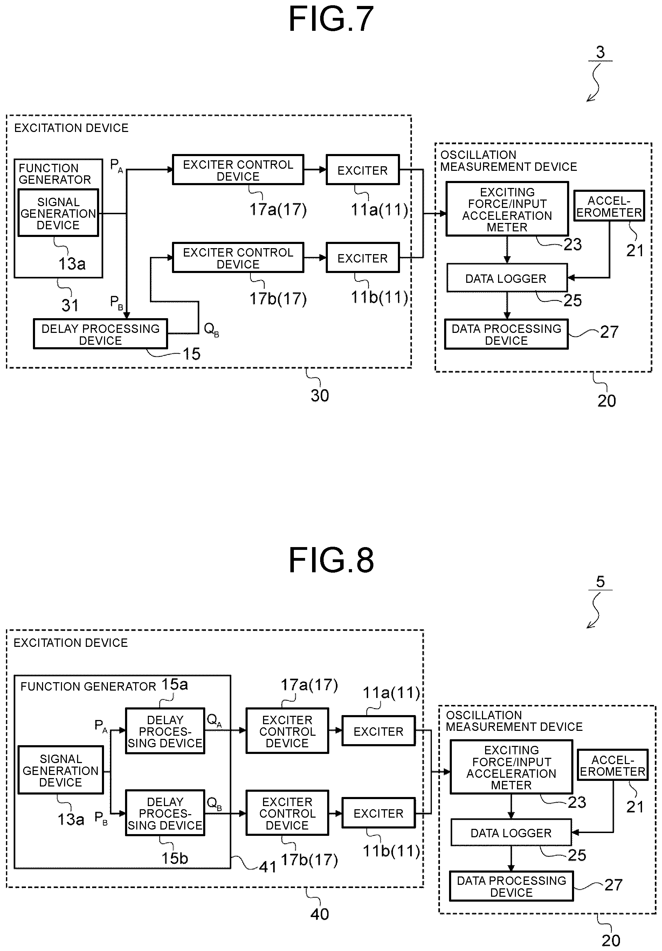

In the vibration characteristic testing device 1, the delay processing device 15 is embedded in the function generator 13 but may be separated from a function generator 31 as in, for example, a vibration characteristic testing device 3 illustrated in FIG. 7.

In this case, as illustrated in FIG. 7, the function generator 31 may generate two reference signals P_{A} and P_{B}, and the delay processing device 15 may perform delay processing on one reference signal P_{B} to generate a delay signal Q_{B}. Alternatively, in the vibration characteristic testing device according to the present invention, a delay processing device may be embedded in an exciter control device that controls an exciter based on a delay signal (not illustrated).

In the present invention, a reference signal input to an exciter control device refers to a reference signal among input waves of vibration input to a plurality of vibration input parts set in an automotive body. A vibration characteristic testing device 5 illustrated in FIG. 8 causes delay processing devices 15a and 15b to generate delay signals Q_{A} and Q_{B}, respectively, for the reference signals P_{A} and P_{B} generated by the signal generation device 13a. In this vibration characteristic testing device 5, if the delay signal Q_{B} is delayed from the delay signal Q_{A}, the delay signal Q_{A} is regarded as a reference signal.

### [Example 1]

Hereinafter described are tests that were conducted to study effects of the present invention.

In Example 1, as illustrated in FIGS. 2 and 3, the automotive body 100 is mounted on the four air cushions 211 placed on the floor 201. Using the vibration characteristic testing device 1 according to the embodiment of the present invention, vibration was input to the plurality of vibration input parts 111 in the automotive body 100 for excitation, and the vibration characteristics of the automotive body 100 were obtained.

As the automotive body 100 to be tested, a commercially available compact car (4.0 m long and 1.7 m wide, weighing 1.0 ton, and having a distance of 2.5 m between the front and rear shafts) was disassembled, and components other than automotive parts such as drive system, interior, functional parts, and electrical parts were removed from the car.

As illustrated in FIGS. 2 and 3, the automotive body 100 was excited by the excitation device 10 of the vibration characteristic testing device 1. The excitation device 10 includes the exciters 11, the function generator 13, and the exciter control devices 17.

The function generator 13 functions as the signal generation device 13a that generates a reference signal and the delay processing device 15 that generates a delay signal by delaying the reference signal. The reference signal or the delay signal generated by the function generator 13 was input to the exciter control devices 17 to perform drive control of the exciters 11, and vibration was input to the automotive body 100. The exciters 11 and the automotive body 100 were connected by the steel exciting bar (stinger/driving rod) 19, and the exciting force/input acceleration meter 23 was placed between the exciting bar (stinger/driving rod) 19 and the vibration input parts 111, or the parts in the automotive body 100 where the exciting bar (stinger/driving rod) 19 was attached. FIG. 5 illustrates a connection state between the exciting bar (stinger/driving rod) 19 and the automotive body 100.

An accelerometer for measuring vibration acceleration was placed in the automotive body 100. A small piezoelectric type accelerometer was used as the accelerometer and was bonded to each part of the automotive body 100 with an adhesive.

Detection signals of the vibration acceleration obtained by the accelerometer were simultaneously recorded in the multi-channel data logger 25 at a sampling frequency of 2.0 kHz, and time history data (time trend data) of the vibration acceleration was acquired. The data processing device 27 converted the time history data (time trend data) of the acquired vibration acceleration into a frequency response spectrum by the Fourier transform, thereby obtaining the frequency and amplitude strength of a natural frequency peak.

In Example 1, the vibration characteristics testing was performed in two ways, that is, by inputting random wave vibration and by inputting sine wave vibration to the plurality of vibration input parts 111 set in the automotive body 100.

### <Excitation by Input Wave of Random Wave (Part 1)>

Two points for attaching an engine frame at the front of the automotive body floor 109 of the automotive body 100 were set as vibration input parts 111c, and two points for attaching a torsion beam at the rear were set as vibration input parts 111d (see FIG. 3). Random wave vibration was continuously input for a certain period of time by the exciters 11 to each of the two vibration input parts 111c at the front and the two vibration input parts 111d at the rear, thereby exciting the automotive body 100.

Input waves of vibration input to the exciters 11 at the two front points and at the two rear points had the same wave form and the same phase. The exciter 11a configured to input vibration to the two front vibration input parts 111c performed drive control of the exciter control device 17a by inputting thereto the reference signal P generated by the signal generation device 13a inside the function generator 13 (see FIG. 4). On the other hand, the exciter 11b configured to input vibration to the two rear vibration input parts 111d performed drive control of the exciter control device 17b (FIG. 6 (b)) by inputting thereto the delay signal Q generated by the delay processing device 15 inside the function generator 13 performing delay processing of the reference signal P (see FIG. 4).

Assuming driving speeds were 72 km/h and 100 km/h during actual driving, the delay signal Q was generated by delay processing to provide the reference signal P with delay times of 125 ms and 90 ms.

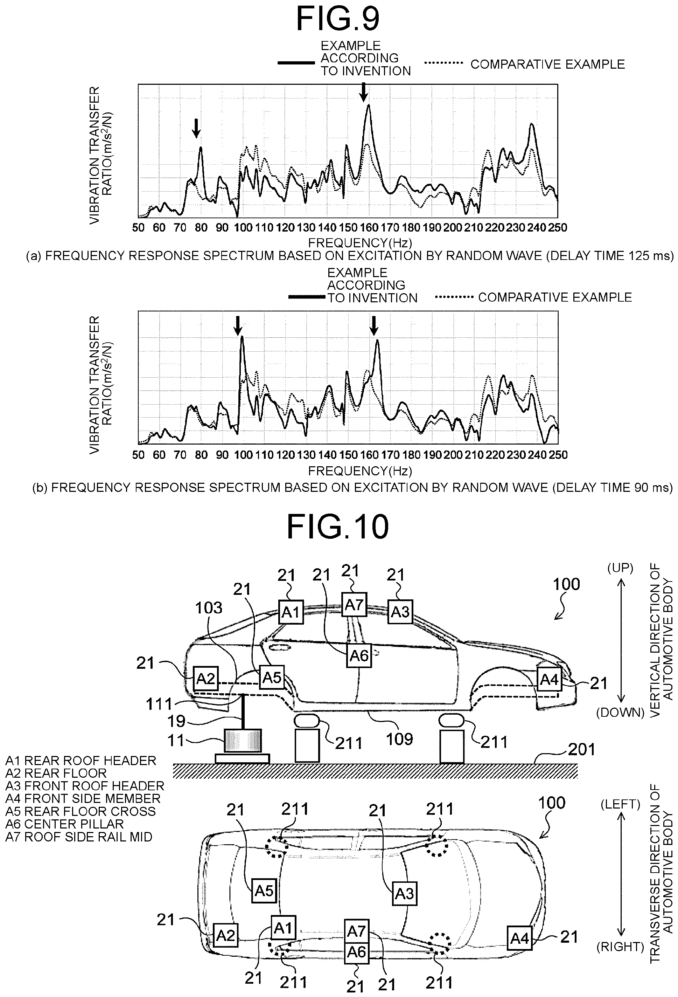

In the vibration characteristics testing, the excitation was continued for 10 minutes, followed by measuring the vibration acceleration with the accelerometer 21 placed in a roof side rail MID (part A7 in FIG. 10) of the automotive body 100, thereby acquiring time history data (time trend data) of the vibration acceleration. The time history data (time trend data) of the acquired vibration acceleration was subjected to the Fourier transform to obtain a frequency response spectrum of the vibration acceleration generated in the roof side rail MID of the automotive body 100.

FIG. 9 illustrates frequency response spectra of the vibration acceleration generated in the roof side rail MID of the automotive body 100 in cases where delay times of 125 ms and to 90 ms were given to the delay signal **Q.** When the delay time was 125 ms (driving speed of 72 km/h), as illustrated in FIG. 9(a), peak values around 80 Hz and 160 Hz of the vibration transfer ratio (ratio of acceleration amplitude) based on the vibration acceleration input to the front vibration input parts 111c increased and a peak value around 100 Hz decreased.

On the other hand, when the delay time was 90 ms (corresponding to the driving speed of 100 km/h), as illustrated in FIG. 9(b), peak values of the vibration transfer ratio around 100 Hz and 165 Hz increased and peak values around 50 Hz and 128 Hz decreased.

As described above, the vibration characteristics testing for simulating different driving speeds in an actual car running test (road test) showed that it is possible to simulate different conditions of vibration generated in the automotive body 100 and to acquire differences in the vibration characteristics depending on driving speeds.

### <Excitation by Input Wave of Sine Wave >

Two points for attaching a torsion beam at the rear right and rear left of the automotive body 100 were set as vibration input parts 111a and 111b (see FIG. 2). The exciters 11 input sine wave vibration having a predetermined frequency to the vibration input parts 111a and 111b for a certain period of time to excite stationary vibration, thereby exciting the automotive body 100.

The input wave of vibration input to the vibration input part 111a on the right side (driver's seat side) was set as the reference signal P generated by the function generator 13. On the other hand, the input wave of vibration input to the vibration input part 111b on the left side (passenger seat side) was set as the delay signal Q delayed by a phase difference given to the reference signal using the delay processing device 15 inside the function generator 13. Both wave forms of the reference signal and the delay signal were sine waves, and the frequencies (excitation frequencies) were set to 40 Hz, 48 Hz, and 103 Hz at which resonance peaks were observed in the frequency response spectra obtained when the automotive body 100 was excited by the input wave of random wave.

In the automotive body 100, the accelerometer 21 for measuring vibration acceleration was placed at each of measuring parts A1 to A6 illustrated in FIG. 10. A1 is a right end portion of a rear roof header in the transverse direction of the automotive body, A2 is a right rear portion of a rear floor of the automotive body, and A3 is a central portion of a front roof header in the transverse direction of the automotive body. Furthermore, A4 is a front end portion of a front side member on the right side, A5 is a central portion of a rear floor cross in the transverse direction of the automotive body, and A6 is a central portion of a right center pillar in the vertical direction of the automotive body.

In one test, sine waves having the same frequency were continuously input for 100 seconds for excitation, and the vibration acceleration was measured by the accelerometer 21 placed in each of the measuring parts A1 to A6 in the automotive body 100, and time history data (time trend data) was acquired with the data logger. After that, frequency response spectra were obtained by the Fourier transform performed on the time history data (time trend data) of the vibration acceleration acquired for each of the parts A1 to A6, and the average value of peak amplitude was calculated.

In addition, the input wave of vibration input to the vibration input part 111b on the passenger seat side was delayed by a phase difference ranging from 0° to 180° with respect to the input wave of vibration input to the vibration input part 111a on the driver's seat side, and the vibration characteristics of the parts A1 to A6 were compared.

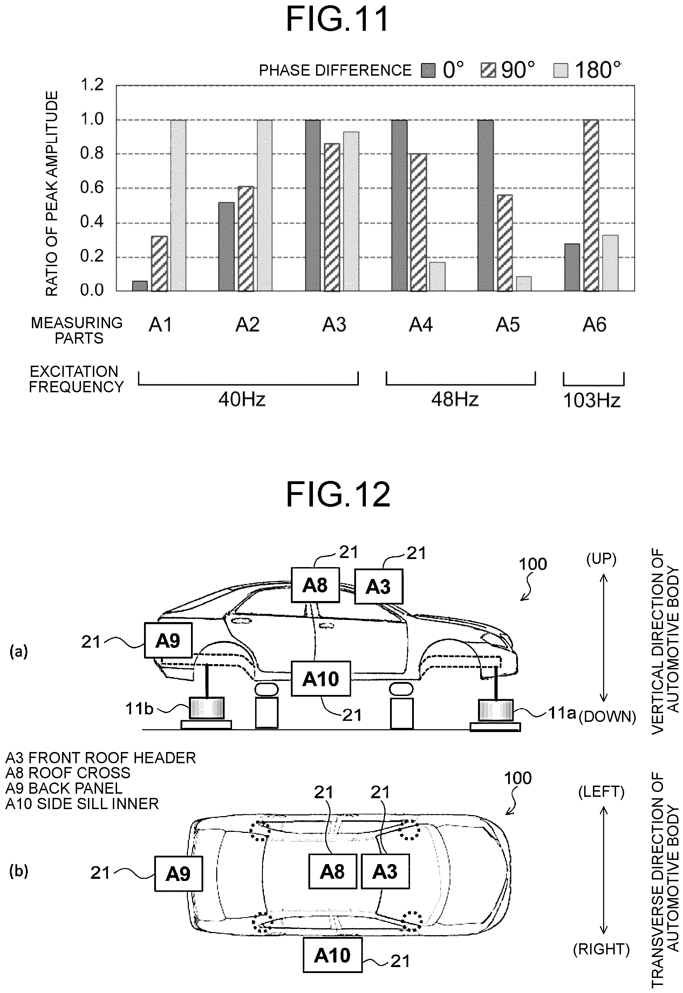

FIG. 11 illustrates peak amplitude strengths obtained when excitation was performed by phase differences of 0° (no phase difference, synchronous), 90°, and 180°. The peak amplitude strengths illustrated in FIG. 11 are ratios, regarding an amplitude strength obtained in a phase difference that shows a prominent peak as 1.0**.** These ratios are given for the purpose of focusing on differences between the phase differences of input waves of vibration input to vibration input parts but not on differences in automotive parts and positions with respect to the amplitude strengths.

As illustrated in FIG. 11, at an excitation frequency of 40 Hz, peak amplitude strengths at the measuring parts A1 and A2 were the highest when a phase difference was 180°. On the other hand, a peak amplitude strength at the measuring part A3 was less affected by the phase differences. In addition, at an excitation frequency of 48 Hz, peak amplitude strengths at the measuring parts A4 and A5 were the highest when no phase difference was given (0°), and the peak amplitude strengths decreased as the phase differences increased. Furthermore, at an excitation frequency of 103 Hz, the measuring part A6 recorded the highest peak amplitude strength when a phase difference of 90° was given.

These results show that the vibration characteristics testing using a body-in-white automotive body makes it possible to acquire the vibration characteristics of the automotive body 100 affected by the input of periodic vibration in a low-frequency band transmitted from the left and right rear wheels simulating the running on a rough road surface.

### [Example 2]

### <Excitation by Input Wave of Random Wave (Part 2)>

In Example 2, vibration characteristics testing was performed, simulating an asphalt pavement surface (running road surface) with less irregularities and periodic road surface irregularities (for example, step paving and rumble strips) at an interval shorter than the distance between front and rear shafts of the automotive body 100. In the vibration characteristics testing, two vibration input parts 111c at the front and two vibration input parts 111d at the rear were set on the automotive body floor 109 of the automotive body 100 (see FIG. 3). Random wave vibration (corresponding to vibration input from the asphalt pavement surface) was input continuously for a certain period of time by the exciters 11 to each of the vibration input parts 111c and the vibration input parts 111d, thereby exciting the automotive body 100.

The input waves of vibration input to the two vibration input parts 111c at the front and the two vibration input parts 111d at the rear had the same wave form having the same phase. The exciter 11a configured to input vibration to the two front vibration input parts 111c input the reference signal P to the exciter control device 17a, thereby performing drive control. On the other hand, the exciter 11b configured to input vibration to the two rear vibration input parts 111d input the delay signal Q to the exciter control device 17b, thereby performing drive control (FIG. 6(b)).

In a case where the shaft-to-shaft distance is equal to the interval of the periodic road surface irregularities, the random wave vibration input from the tires to the body corresponds to a case where vibration is input to the front and rear of the automotive body 100 at the same timing (phase synchronization). However, when the interval of the periodic road surface irregularities is shorter than the shaft-to-shaft distance, the timing of input to the rear of the automotive body 100 is delayed as compared with the timing of input to the front depending on driving speeds. Given this time difference, a delay time provided to the delay signal Q was determined.

In Example 2, assuming that the shaft-to-shaft distance of the automotive body 100 was 2500 m, the driving speed during actual driving was 100 km/h, and the periodic road surface irregularities had intervals of 1860 mm, 2180 mm, and 2330 mm, delay times provided to the delay signal Q were determined to be 23.0 ms, 11.5 ms, and 6.1 ms, respectively. The reference signal P was subjected to delay processing according to these delay times, thereby generating the delay signal Q.

In the automotive body 100, the accelerometer 21 for measuring vibration acceleration was placed at each of measuring parts A3 and A8 to A10 illustrated in FIG. 12. A3 is the central portion of the front roof header in the transverse direction of the automotive body, and A8 is a central portion of a roof cross in the transverse direction of the automotive body. Furthermore, A9 is a central portion of a back panel in the transverse direction of the automotive body, and A10 is a central portion of a side sill inner in the longitudinal direction of the automotive body.

In the vibration characteristics testing, the excitation was continued for 10 minutes by random waves having the same wave form, followed by measuring the vibration acceleration with the accelerometer 21 placed in A3 and A8 to A10 of the automotive body 100, thereby acquiring time history data (time trend data) of the vibration acceleration. The time history data (time trend data) of the acquired vibration acceleration was subjected to the Fourier transform to obtain a frequency response spectrum of the vibration acceleration generated in A3 and A8 to A10.

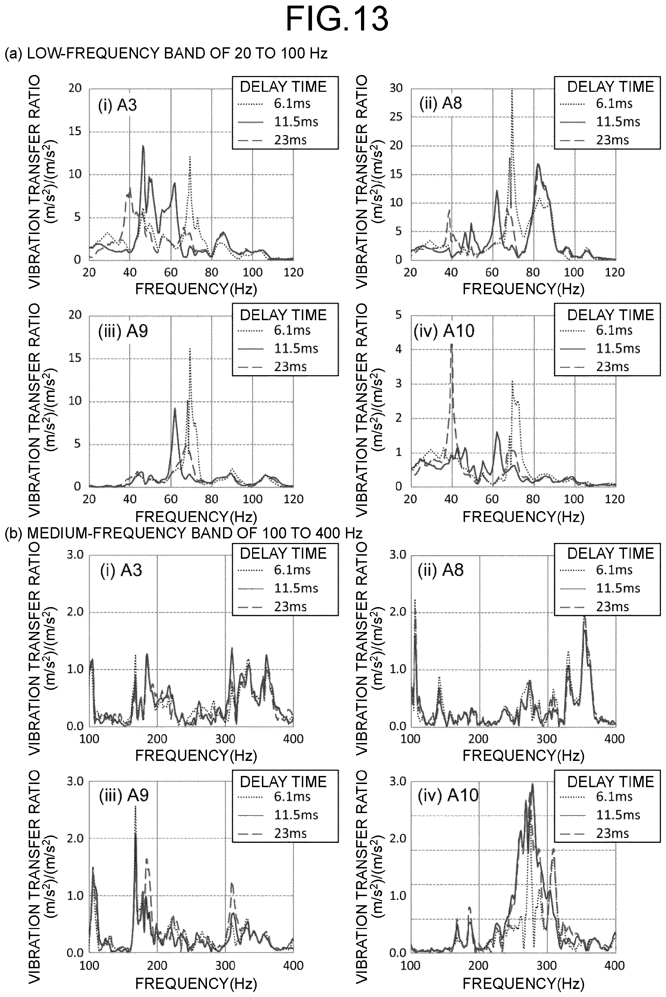

FIG. 13 illustrates, with graphs, frequency response spectra of vibration acceleration generated in (i) A3, (ii) A8, (iii) A9, and (iv) A10. In FIG. 13, the frequency (Hz) of the vibration acceleration is taken along the abscissa, and the vibration transfer ratio ((m/s²)/(m/s²)) of the vibration acceleration is taken along the ordinate. FIG. 13(a) illustrates frequency response spectra of a frequency band from 20 to 100 Hz, and FIG. 13(b) illustrates frequency response spectra of a frequency band from 100 to 400 Hz. The frequency band from 20 to 100 Hz in FIG. 13(a) is a low-frequency band within an audible range. On the other hand, in the frequency band from 100 to 400 Hz illustrated in FIG. 13(b), the human auditory system becomes more sensitive than in the frequency band illustrated in FIG. 13(a) and causes internal vehicle noise problem.

In the frequency band from 20 to 100 Hz, as can be seen in FIG. 13(a), when the delay time for the delay signal Q of vibration input to the vibration input part 111d at the rear of the automotive body 100 is changed from 6.1 ms to 23.0 ms, a frequency response spectrum distribution changes, and a frequency (peak frequency) having the highest vibration transfer ratio changes. For example, in the frequency response spectrum of the vibration acceleration generated in A3 illustrated in FIGS. 13(a) (i), the peak frequencies are 69 Hz, 47 Hz, and 41 Hz when the delay times of 6.1 ms, 11.5 ms, and 23.0 ms are given.

On the other hand, the frequency band from 100 to 400 Hz illustrated in FIG. 13(b) does not show a change in the frequency response spectral distribution as in the frequency band of 20 to 100 Hz but shows a phenomenon in which the vibration transfer ratio of a specific frequency increases depending on the delay times. For example, in the frequency response spectrum of the vibration acceleration generated in A10 illustrated in FIG. 13(b) (iv), the vibration transfer ratios at 240 to 290 Hz and 310 Hz increase when the delay times of 11.5 ms and 23.0 ms are given as compared with the ratio when the delay time of 6.1 ms is given.

The aforementioned Examples show that the frequency response spectra greatly change due to a change in the delay time provided to the delay signal Q which is sent to the rear of the automotive body 100. This result indicates that the present invention enables simulation and evaluation of different conditions in which vibration and noise perceived by a driver differ depending on intervals of periodic road surface irregularities.

### Industrial Applicability

According to the present invention, it is possible to provide automotive body vibration characteristic testing method and device which appropriately enable simulation of road surface conditions and vehicle running conditions during actual driving, thereby obtaining the vibration characteristics of the automotive body.

### Reference Signs List

1 VIBRATION CHARACTERISTIC TESTING DEVICE
3 VIBRATION CHARACTERISTIC TESTING DEVICE
5 VIBRATION CHARACTERISTIC TESTING DEVICE
10 EXCITATION DEVICE
11 EXCITER
11a EXCITER
11b EXCITER
13 FUNCTION GENERATOR
13a SIGNAL GENERATION DEVICE
15 DELAY PROCESSING DEVICE
15a DELAY PROCESSING DEVICE
15b DELAY PROCESSING DEVICE
17 EXCITER CONTROL DEVICE
17a EXCITER CONTROL DEVICE
17b EXCITER CONTROL DEVICE
19 EXCITING BAR (STINGER/DRIVING ROD)
20 OSCILLATION MEASUREMENT DEVICE
21 ACCELEROMETER
23 EXCITING FORCE/INPUT ACCELERATION METER
25 DATA LOGGER
27 DATA PROCESSING DEVICE
30 EXCITATION DEVICE
31 FUNCTION GENERATOR
40 EXCITATION DEVICE
41 FUNCTION GENERATOR
100 AUTOMOTIVE BODY
101 FRONT SIDE MEMBER
103 REAR SIDE MEMBER
103a MOUNTING BRACKET
105 BUMPER REINFORCEMENT
107 REAR FLOOR CROSS MEMBER
109 AUTOMOTIVE BODY FLOOR
111 VIBRATION INPUT PART
111a VIBRATION INPUT PART
111b VIBRATION INPUT PART
111c VIBRATION INPUT PART
111d VIBRATION INPUT PART
201 FLOOR
203 DAMPING RUBBER
211 AIR CUSHION

## Claims

1. An automotive body vibration characteristic testing method for obtaining vibration characteristics of an automotive body by inputting vibration to the automotive body, the method comprising:
an excitation step of
setting a plurality of vibration input parts in the automotive body supported by an air cushion, and
inputting vibration to each of the plurality of set vibration input parts to excite the automotive body; and
an oscillation measurement step of
measuring data on vibration characteristics of the automotive body excited in the excitation step,
wherein, in the excitation step, an input wave of vibration input to one of the vibration input parts in the automotive body is delayed from an input wave of vibration input to other vibration input parts.

2. The automotive body vibration characteristic testing method according to claim 1, wherein the excitation step includes:
setting the vibration input parts at the rear right and rear left of the automotive body;
generating a plurality of reference signals having a sine wave or a random wave as a reference for an input wave of vibration input to the vibration input parts;
generating a delay signal obtained by delaying one of the plurality of reference signals generated;
inputting vibration having the reference signal as an input wave to one vibration input part at the rear left or rear right of the automotive body; and
inputting vibration having the delay signal as an input wave to the other vibration input part at the rear left or rear right of the automotive body.

3. The automotive body vibration characteristic testing method according to claim 1, wherein the excitation step includes:
setting the vibration input parts at the front and rear of the automotive body;
generating a plurality of reference signals having a sine wave or a random wave as a reference for an input wave of vibration input to the vibration input parts;
generating a delay signal obtained by delaying one of the plurality of reference signals generated;
inputting vibration having the reference signal as an input wave to the vibration input part at the front of the automotive body; and
inputting vibration having the delay signal as an input wave to the vibration input part at the rear of the automotive body.

4. The automotive body vibration characteristic testing method according to any one of claims 1 to 3, wherein the oscillation measurement step includes at least one of:
measuring vibration acceleration generated in the automotive body using an accelerometer placed in the automotive body, and
measuring sound pressure of noise generated from the automotive body using a microphone placed inside the automotive body as the data on the vibration characteristics.

5. A automotive body vibration characteristic testing device for obtaining vibration characteristics of an automotive body by inputting vibration to the automotive body, the device comprising:
an excitation device configured to input vibration to a plurality of vibration input parts set in the automotive body supported by an air cushion to excite the automotive body; and
an oscillation measurement device configured to measure data on the vibration characteristics of the automotive body excited by the excitation device,
wherein the excitation device includes:
a plurality of exciters configured to input vibration of a predetermined input wave to the plurality of vibration input parts in the automotive body for excitation;
a signal generation device configured to generate a plurality of reference signals serving as references for input waves of vibration input to the vibration input parts;
a delay processing device configured to generate a delay signal by delaying one of the plurality of generated reference signals; and
a plurality of exciter control devices configured to perform drive control of each of the exciters based on the reference signals or the delay signal generated, and
the oscillation measurement device includes:
at least one of: an accelerometer placed in the automotive body and configured to measure vibration acceleration generated in the automotive body; and a microphone placed inside the automotive body and configured to measure data on noise generated from the automotive body;
an exciting force/input acceleration meter configured to measure an exciting force and input acceleration for exciting the automotive body by vibration input to the automotive body; and
a data logger configured to
acquire at least one of: the vibration acceleration measured by the accelerometer; and sound pressure of noise measured by the microphone, and
acquire the exciting force and input acceleration measured by the exciting force/input acceleration meter.
